# EUROPEAN PATENT APPLICATION

(11) **EP 3 301 938 A1**
(43) Date of publication of application: **04.04.2018**
(21) Application number: 16306242.5
(22) Date of filing: 28.09.2016
(51) Int. Cl.: H04N 21/258, H04B 3/54, H04N 21/4363, H04N 21/45, H04N 21/4627, H04N 21/226, H04N 21/426, H04H 20/84

(54) **METHOD, SYSTEM AND APPARATUS FOR GRANTING LOCATION-BASED CREDENTIALS TO A DEVICE**

(71) Applicant: Thomson Licensing, 92130 Issy-les-Moulineaux (FR)
(72) Inventor: SACHOT, Jean-Claude, 35576 Cesson-Sévigné Cedex (FR)
(74) Representative: Huchet, Anne

(57) **Abstract**

A salient idea is to rely on the fact that a device at some point needs to be powered from an in-home power distribution network and that such a power distribution network, because of its fixed wired nature, may be used to uniquely identify and locate the power delivery point that a given device is powered from, and, by extension, where the device is located. It is proposed to create and leverage a unique identifier source, the signal of which is carried across a power distribution network (typically a domestic power installation). The source may be associated with the power meter of the customer premise, the location and unique identifier of this power meter are known by e.g. the utility provider. While being powered, a device receives this signal source carrying the unique identifier, which is representative of the customer location. The received identifier is further used in granting or denying access to services for that device, depending on whether it matches or not an identifier representative of the intended usage location.

## Description

### 1. TECHNICAL FIELD

The technical field of the disclosed method, system and apparatus is related to pay television service delivery and more precisely to anti-piracy measures dedicated to ensure devices are used in their intended customer place and not elsewhere.

### 2. BACKGROUND ART

Many video consumption services are rendered through the use of hardware devices, such as smart TV sets or set-top boxes, and the ability to locate with high precision the place where these devices are being used at any time is often key to operate the service and sustain its commercial viability. This is the case for example of pay television service providers who want to locate the set-top boxes that they provide to their customers, checking that they are actually being used at the intended customer place and not elsewhere. This is of high importance when the service providers are providing multiple boxes as part of a multi-screen offering, each of them having the capability to access pay television or video content individually. For example, a customer providing one of his multiple devices to a friend who will be using it on his own, represents an unexpected usage of the offering, and a loss of revenue for the service provider. This location control can also be mandated by the terms of content distributions agreements restricting the time period and/or the place when/where a content might be delivered.

A pay video customer is generally associated with a location, such as for example his home address, and devices provided to that customer are expected to be used in that customer home, which is a known location. A possible way to avoid unexpected usage of devices provided to customers is to be able to locate the devices in use once they have been provided to customers.

The Global Positioning System (GPS) technologies are universally known, widely used, and they address very well the need for geolocation of devices, offering a very high precision level. However these technologies work only if the receiving device is in line of sight of several satellites of the GPS constellation at the same time, which excludes reliable indoor usage in most cases. Moreover

There are also other known methods for localizing devices leveraging their broadband network connection, when the network is a fixed communication network, such as for example a twisted pair (xDSL) or an optical fiber (FTTH), operated along with an operator-provided broadband gateway, providing point-to-point communication for every customer. With the Internet Protocol now widely used to deliver video content across these point to point distribution networks, customer location can be traced from the public IP address allocated to that customer and the knowledge of the mapping between the public IP addresses and the location of the Internet subscriber.

However, some types of video delivery networks such as broadcast television over HFC (Hybrid Coaxial Cable) or others involving wireless distribution means (such as satellite distribution, WiFi or 4G/LTE), do not provide an accurate mapping between an operator-controlled consumer premise network equipment and a particular customer location. In such shared medium distribution networks, where a device may be illegally moved from one reception place to another, there is a need for a method able to accurately locate where a device provided to a customer is, so as to verify it is used from its intended customer place and not from an unexpected location.

### 3. SUMMARY

A salient idea is to rely on the fact that a device at some point needs to be powered from an in-home power distribution network and that such a power distribution network, because of its fixed wired nature, may be used to uniquely identify and locate the power delivery point that a given device is powered from, and, by extension, where the device is located. It is proposed to create and leverage a unique identifier source, the signal of which is carried across a power distribution network (typically a domestic power installation). The source may be associated with the power meter of the customer premise, the location and unique identifier of this power meter are known by e.g. the utility provider. While being powered, a device receives this signal source carrying the unique identifier, which is representative of the customer location. The received identifier is further used in granting or denying access to services for that device, depending on whether it matches or not an identifier representative of the intended usage location.

To that end a method for granting location-based credentials to a device for accessing a service is disclosed, wherein the device is identified by a device identifier associated with a location identifier. The method comprises:
- Receiving a current location identifier by the device from a power distribution network, the device being connected to the power distribution network and power supplied from the power distribution network;
- Granting the credentials to the device in case the current location identifier matches the location identifier.

According to a particularly advantageous variant, the current location identifier is received from another device connected to the power distribution network.

According to another particularly advantageous variant, the other device is a power meter of a power supply system delivering power on the power distribution network.

According to another particularly advantageous variant, the current location identifier is received by the device in a beacon periodically transmitted over the power distribution network.

According to another particularly advantageous variant, the current location identifier is received from the power distribution network as a data packet generated by the other device as a response packet to a request packet generated by said device.

According to another particularly advantageous variant, the location identifier is provisioned in said device and a matching of said current location identifier to said location identifier, is evaluated in said device.

According to another particularly advantageous variant, the method further comprises transmitting said device identifier and said current location identifier to a server via a communication network, said device receiving from said server said granted credentials in case said current location identifier matches said location identifier.

According to another particularly advantageous variant, the method further comprises obtaining an indication of illegal location from said received current location identifier, in case said current location identifier does not match the location identifier.

In a second aspect a method for localizing a device accessing a service is also disclosed. The method comprises:
- Receiving from the device a current location identifier, being received by the device from a power distribution network, the device being connected to the power distribution network and power supplied from the power distribution network;
- Localizing the device based on the received current location identifier, the current location identifier being associated with a location.

In a third aspect a device being granted location-based credentials to access a service is also disclosed, wherein the device is identified by a device identifier associated with a location identifier. The device comprises at least one processor configured to:
- Receive a current location identifier from a power distribution network, the device being connected to the power distribution network and power supplied from the power distribution network;
- Transmit the device identifier and the current location identifier to a server;
- Receive from the server the credentials to access the service in case the current location identifier matches the location identifier.

According to a particularly advantageous variant, the current location identifier is received from a power meter of a power supply system delivering power on the power distribution network.

In a fourth aspect a device being granted location-based credentials to access a service is also disclosed, wherein the device is identified by a device identifier associated with a location identifier. The device comprises:
- Means for receiving a current location identifier from a power distribution network, the device being connected to the power distribution network and power supplied from the power distribution network;
- Means for transmitting the device identifier and the current location identifier to a server;
- Means for receiving from the server the credentials to access the service in case the current location identifier matches the location identifier.

According to a particularly advantageous variant, the current location identifier is received from a power meter of a power supply system delivering power on the power distribution network.

In a fifth aspect a server granting location-based credentials to a device, for accessing a service is also disclosed, wherein the device is identified by a device identifier associated with a location identifier. The server comprises at least one processor configured to:
- Receive from the device the device identifier and a current location identifier being received by the device from a power distribution network, the device being connected to the power distribution network and power supplied from the power distribution network;
- Grant the credentials to the device in case the current location identifier matches the location identifier.

In a sixth aspect a server granting location-based credentials to a device, for accessing a service is also disclosed, wherein the device is identified by a device identifier associated with a location identifier. The server comprises:
- Means for receiving from the device the device identifier and a current location identifier being received by the device from a power distribution network, the device being connected to the power distribution network and power supplied from the power distribution network;
- Means for granting the credentials to the device in case the current location identifier matches the location identifier.

In a seventh aspect a device being granted location-based credentials to access a service is also disclosed, wherein the device is identified by a device identifier associated with a location identifier. The device comprises at least one processor configured to:
- Receive a current location identifier from a power distribution network, the device being connected to the power distribution network and power supplied from the power distribution network;
- Grant the credentials to access the service in case the current location identifier matches the location identifier.

According to a particularly advantageous variant, the current location identifier is received from a power meter of a power supply system delivering power on the power distribution network.

In an eighth aspect a device being granted location-based credentials to access a service is also disclosed, wherein the device is identified by a device identifier associated with a location identifier. The device comprises:
- Means for receiving a current location identifier from a power distribution network, the device being connected to the power distribution network and power supplied from the power distribution network;
- Means for granting the credentials to access the service in case the current location identifier matches the location identifier.

According to a particularly advantageous variant, the current location identifier is received from a power meter of a power supply system delivering power on the power distribution network.

In a ninth aspect a computer program for granting location-based credentials to a device, for accessing a service is also disclosed, wherein the device is identified by a device identifier associated with a location identifier. The computer program comprises program code instructions executable by at least one processor for:
- Receiving a current location identifier by the device from a power distribution network, the device being connected to the power distribution network and power supplied from the power distribution network;
- Granting the credentials to the device in case the current location identifier matches the location identifier.

In a tenth aspect, the invention is directed to a computer-readable storage medium storing computer-executable program instructions to enable a computer to perform the disclosed methods.

In an eleventh aspect, the invention is directed to a computer program product comprising instructions of program code for execution by at least one processor to perform the disclosed methods.

While not explicitly described, the present embodiments may be employed in any combination or sub-combination. For example, the present principles are not limited to the described variants, and any arrangement of variants and embodiments can be used. Moreover the present principles are not limited to the described powerline distribution networks. The present principles are not further limited to the described delivery networks and are applicable to any kind of delivery network. The present principles are not further limited to the described device identifiers and corresponding broadcasting / beaconing techniques.

Besides, any characteristic, variant or embodiment described for the method is compatible with a device intended to process the disclosed method, with a computer program comprising program code instructions executable by a processor to process the disclosed method and with a computer-readable storage medium storing program instructions.

### 4. BRIEF DESCRIPTION OF THE DRAWINGS

In the drawings, an embodiment of the present disclosure is illustrated. It shows:
- **Figure 1** illustrates the method for granting location-based credentials to a device according to a specific and non-limitative embodiment of the present principles;
- **Figure 2** depicts an example of a device being granted credentials within one location, and another device also intended for use in the same one location, being denied credentials for use in another location, according to a specific and non-limitative embodiment of the present principles;
- **Figure 3** represents a processing device being granted location-based credentials according to a specific and non-limitative embodiment of the present principles;
- **Figure 4** represents an exemplary architecture of the processing device of figure 3 according to a specific and non-limitative embodiment of the present principles.

### 5. DESCRIPTION OF EMBODIMENTS

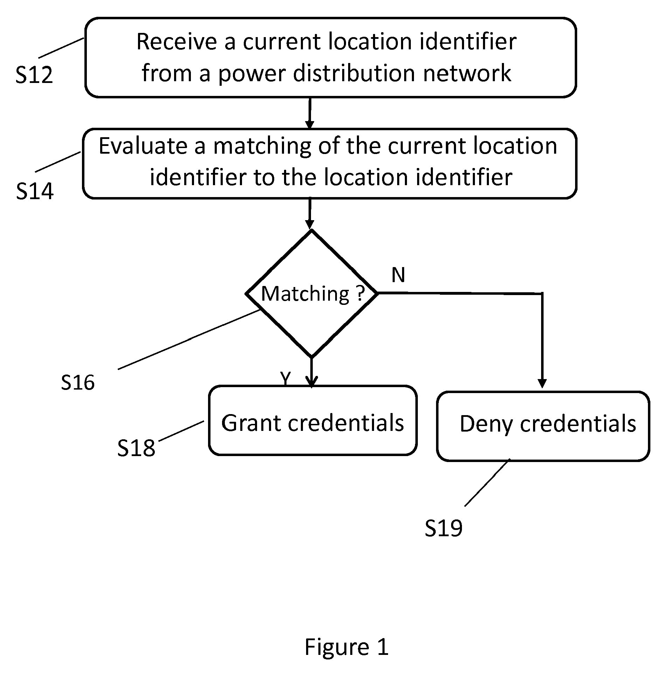

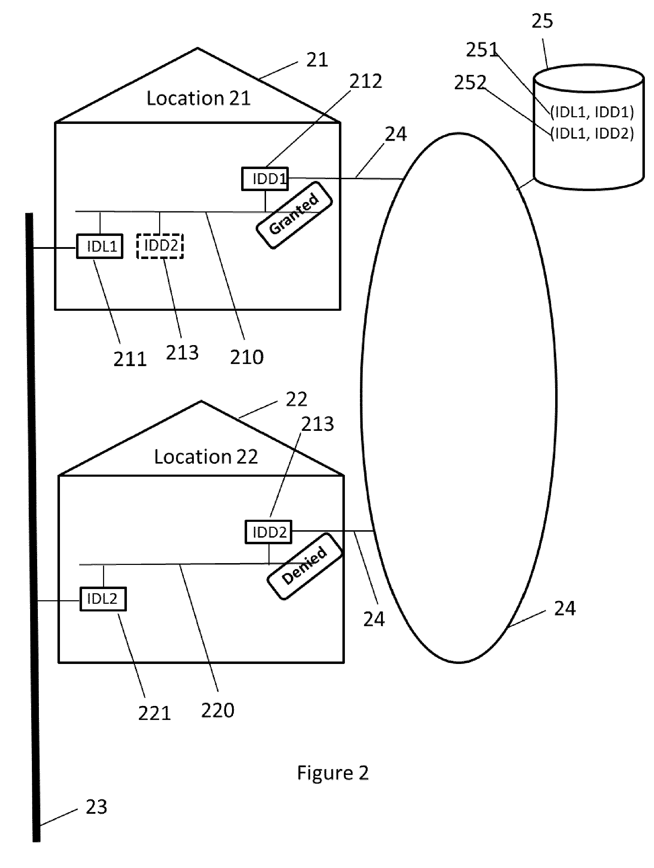

**Figure 1** depicts a method for granting location-based credentials to a device 212, 213 according to a specific and non-limitative embodiment. The method is also further described from the exemplary illustration of **Figure 2****.** Without limitation and loss of generality, the method is described considering a cable TV service provider providing pay television services to customers over a coaxial cable infrastructure 24. Such service providers generally provide devices 212, 213 such as set-top-boxes to their customers for receiving the pay television services. Credentials are generally used by service providers so as to restrict the access to services to the customers who subscribe to a set of services. Granting / denying credentials is to be taken in a broad sense and may take various technical forms. Granting / denying credentials has the same meaning as authorizing / preventing an access to a set of services. A first example of credentials is a login and a password for accessing a restricted area of a web site. A login and a password are provided to a user when for example he registers to a web site for the first time. Another example of credentials are the user's right which are managed by conditional access systems used in video delivery networks. As matter of example, the DVB standards define a method by which an operator can scramble a digital-television stream, which access is provided only to those who have received entitlement messages (usually referred to as EMMs, entitlement management messages), delivered over the broadcast network, and granting them the access right, which for example are hosted in a valid decryption smart card or any other protected mean of storage. A last example of credentials is the licence granted by a video-on-demand provider for purchasing and viewing a movie under control of a Digital Right Management (DRM) technology. DRM comprises access control technologies that are used to restrict usage of proprietary hardware and copyrighted content. Granting a licence for example comprises transmitting an information item which processing on the device further enables the access and the decoding of a protected content. More generally, any service provider, any kind of conditional access and any kind of device able to receive services delivered conditionally by a service provider is compatible with the disclosed method. As mentioned above, the method is described considering a cable TV delivery network, wherein both the video broadcast delivery and the bidirectional data traffic may be supported by a same physical infrastructure. But any other kind of delivery network is compatible with the disclosed principles. In case of pure broadcast delivery networks (i.e. not supporting bidirectional communication), such as for example satellite or terrestrial television distribution networks, another bidirectional network, such as for example Internet is used in addition to the broadcast network for the data information exchange, dedicated for example to right management, credential granting/denying purposes. Likewise, video delivery networks based on other wireless networking technologies, such as for example wireless local area networks (WiFi) or cellular networks (4G/LTE) are also compatible with the disclosed principles.

A customer subscription to pay television services is generally related to a customer location such as a customer home location 21, 22 wherein the home comprises a connection to the service provider network 24. As a customer subscribes to a cable TV set of channels, he does it for a particular home address, wherein a connection to the cable network is available. Regardless of its location, the device 212, 213 is connected to the delivery network 24 and is uniquely identified by a device identifier IDD1, IDD2. The device 212, 213 and/or the service needs to be provisioned by the service provider with a set of parameters, of which entitlements, so that the device 212, 213 is able to receive the services to which the customer subscribed. Service provisioning comprises the necessary configurations so that a correctly provisioned device 212 is able to descramble and correctly receives the video channels corresponding to the customer subscription. In many pay television networks, service provisioning comprises the supply of one smart card per device to the customer, as well as the head end configuration enabling a periodic generation, on the network, of EMMs targeting the supplied smart cards.

According to a particular embodiment, devices 212, 213 are uniquely identified by unique identifiers IDD1, IDD2, and a device identifier IDD1, IDD2 is associated with an intended location identifier IDL1 as part of the service provisioning process. Indeed service providers maintain an information database 25 about their customers as they manage / configure a customer subscription. Without limitation such information comprises for example a customer postal address, an email address for being able to contact the customer. In an advantageous variant, a home location identifier IDL1, uniquely identifying a customer home location, is included in the information database 25 as the intended location identifier related to that customer subscription.

In a particularly advantageous variant a location identifier IDL1, IDL2 uniquely identifies a power meter 211, 221 of a customer home location 21, 22. For example the location identifier IDL1, IDL2 is a logical or a network address of the power meter 211, 221 within the power supply delivery system 23. In another example the location identifier IDL1, IDL2 is a serial number of the power meter 211, 221 of the customer home location 21, 22. More generally the location identifier IDL1, IDL2 is any kind of identifier uniquely identifying the local power distribution network 210, 220 of the customer home location 21, 22 metered by a power meter 211, 221. In case power meters 211, 221 are owned or provided by an electricity provider different from the pay television service provider, the location identifiers IDL1, IDL2, determined by the electricity provider are shared with the pay television service provider by for example a shared data base or any other means known to the skilled in the art. The disclosed method is further not restricted to individual homes and individual power meters. It is also applicable to larger buildings or to office environments, considering that portions of power supply networks are identifiable, and can be associated with locations.

In an advantageous variant, associations 251, 252 of a device identifier IDD1, IDD2 with an intended location identifier IDL1 are stored in a database of a server 25 of the service provider, as part of the customer information system. In the example illustrated in Figure 2, a service provider allocates two devices 212 and 213 to a single customer located at the location 21, identified by the location identifier IDL1. Consequently the association 251 indicates the device 212 identified by the unique identifier IDD1 is associated with the intended location identifier IDL1. Similarly, the association 252 indicates the device 213 identified by the unique identifier IDD2 is associated with the intended location identifier IDL1.

Back to Figure 1, in the step S12, a current location identifier is received from a power distribution network 210, 220, by the device 212, 213, as the device 212, 213 is connected to the power distribution network 210, 220 for being powered. The disclosed method relies on the fact that AC powered devices receiving pay television services over a cable network 24 are both connected to the same cable network 24 for receiving video services and to a power distribution network 210, 220 for being at least power supplied. In case pay television services are delivered over wireless networks such as Satellite, WiFi or 4G/LTE networks, the connection of the device 212, 213 to the delivery network is a logical connection, comprising for instance wireless signal reception and/or association/authentication. The disclosed principles are not limited to a physical connection to a physical wired medium for the pay television services reception. As a device 212, 213 is connected to the power distribution network 210, 220, it receives a location identifier representative of the current location, and called the current location identifier. In the example illustrated in Figure 2, the device 212, plugged on the power distribution network 210 of the home location 21 receives IDL1 as the current location identifier, while the device 213, plugged on the power distribution network 220 of the home location 22 receives IDL2 as the current location identifier.

In a first variant, the current location identifier is received via the power distribution network from a source embedded in the power meter 211, 221 which is metering the power supplied to the home by a power supply system 23. The source for example uses the unique identifier of the power meter. In that case the current location identifier is the unique identifier of the power meter 211, 221, managed for example by the electricity provider.

In a second variant, the current location identifier is received from another independent device connected to the power distribution network 210, 220. This other independent device is provided for example by the same pay television service provider for uniquely identifying the customer location. This other independent device can be a very simple device, such as for example a power plug accessory, which purpose is to broadcast the unique identifier IDL1, IDL2 associated with a single, unique power distribution network 210 or 220. This simple device is different from a second receiver that could have been provided by the service provider as it does not allow to receive the pay television services. In a second example, this other independent device is provided by a third party trusted authority independent of the pay television service provider or the electricity provider. The third party trusted authority further makes available to the pay television service provider the unique identifier IDL1, IDL2 of the other independent device along with, for example customer identity and location information (name, address).

In a third variant, the current location identifier is received from yet another independent device, connected to the power meter 211, 221 by means of a dedicated interface, wherein the yet another independent device receives the current location identifier from the power 211, 221. The yet another independent device is further connected to the power distribution network 210, 220 for further transmitting the current location identifier on the power distribution network 210, 220 according to any of the variants described below. Optionally, and in any of the described variants, the current location identifier is encrypted and received by the device 212, 213 in an encrypted form.

In a particular embodiment, and according to any of the variants described above, the current location identifier is carried in a beacon, for example a broadcast beacon, periodically transmitted over the power distribution network 210, 220. The period of the beacon transmission may be any value (from seconds to tens of minutes), but impacts the latency for getting the credentials granted at the device installation. Indeed after being connected to the power distribution network 210, 220 the device 212 needs to wait at least the period duration for receiving the current location identifier for getting credentials granted as described further below.

In another embodiment, and also according to any of the variants described above, the device 212, 213 sends a data packet over the power distribution network 210, 220 requesting a current location identifier. The power meter 211, 221, or the other device, depending on the variant, responds to the data packet request by sending a data packet response comprising the current location identifier corresponding to the current device location 21, 22.

The current location identifier is then evaluated against an intended location identifier. This evaluation is described below according to different embodiments, and following the illustrative example of figure 2, where the service provider allocates two devices 212 and 213 to a single customer located at location 21.

### Network based credentials grants

In a first embodiment, the location identifier IDL1 corresponding to the customer location is stored in a server 25, for instance in the service provider information system as described above. As a customer subscribes to services, a unique identifier of his home is provisioned as the intended location identifier IDL1 for that customer for instance in the service provider information system. As the service provider allocates one or more devices 212, 213 to that customer, the unique identifiers IDD1, IDD2 corresponding to the allocated devices 212, 213 are also associated 251, 252 with the intended location identifier IDL1 for that customer in the information system. As the customer located at location 21, connects his device 212 to both the pay television network 24 and the power distribution network 210, the device 212 receives a current location identifier IDL1 from the power distribution network 210. If the device 213 is connected to both the pay television network 24 and the power distribution network 220 of location 22, the device 213 receives a current location identifier IDL2 from the power distribution network 220. The device 212, 213 transmits the received current location identifier IDL1, IDL2 together with its own device identifier IDD1, IDD2 to the server 25 in a data packet via a communication network. Advantageously, the communication network is the same network as the delivery network 24 (eg the coaxial network), but it may also be any other network. For example in case the delivery network is a satellite network with no return channel, the communication network is for example the Internet network. The server 25, receiving a current location identifier (S12) together with a device identifier (S13), evaluates in the steps S14-S16 whether the current location identifier matches the intended location identifier for that device, as provisioned in the information system in any of its variants.

The matching evaluation may take various alternate forms depending on the implementation. For instance associations 251, 252 between device identifiers IDD1, IDD2 and an intended location identifier IDL1 are provisioned in the information system. The received device identifier IDD1, IDD2 is used as a key to retrieve the corresponding intended location identifier IDL1, IDL2, that needs to be identical to the received current location identifier, for the matching to be successful. In another example associations between a customer identifier and its allocated device identifiers IDD1, IDD2 are provisioned in a first database, and associations between customer identifiers and location identifiers IDL1, IDL2 and provisioned in a second database. In that second example, a received device identifier IDD1, IDD2 is used as a key to retrieve the corresponding customer identifier from the first database, which is then further used as a key to retrieve the corresponding intended location identifier from the second database. The retrieved intended location identifier IDL1 needs to be identical to the received current location identifier for the matching to be successful.

In case the matching is successful, revealing the device 212 has been connected to the delivery network in an expected location 21, the credentials for receiving the services corresponding to the subscription are granted in the step S18 and the device 212 receives the granted credentials from the server 25. In the example of conditional access systems, granting credentials comprises generating and transmitting entitlement management messages to the device 212, being forwarded to a smart card so that a valid decryption key is provided to the device 212 for accessing the protected content. In the example of the DRM, granting credentials comprises generating and transmitting a license to the device 212, over for example the delivery network 24. The license is then forwarded to the DRM module of the device 212 for providing access to the protected content. Any other means for granting credentials to the device 212 in case the received current location identifier matches the intended location identifier are compatible with the disclosed principles.

In case the device does not return any location identifier or in case the matching is not successful, revealing the device 213 has been plugged in an unexpected location 22, the credentials for receiving the services corresponding to the subscription are denied in the step S19. For example no EMM is generated nor transmitted to the device 213, so that no access right hosted in a decryption smart card of the device 213 are provided. In another example a restricted license, or even no license at all is transmitted to the device 213 so that the embedded DRM does not provide any access to the protected content. Any other means for denying credentials to the device 213 in case the received current location identifier does not match the intended location identifier are compatible with the disclosed principles.

Optionally, the service provider, may try to identify where the device 213 is being tentatively and "illegally" used from the received current location identifier. Indeed, as the illegal user is likely to not belong to the service provider subscribers, its current location identifier is likely to be unknown to the service provider. Advantageously, the service provider has an access to a shared database where real locations, eg addresses, can be deduced from location identifiers, such shared database covering a population larger than the service provider subscribers. A service provider can localize the places of such illegal usages by accessing such shared database. Obtaining an illegal location 22 from the received current location identifier IDL2, in case the current location identifier IDL2 does not match the location identifier IDL1, is advantageous as it allows for example the service provider to obtain a proof of an illegal usage, for further charging its initial customer. Indeed the service provider may decide to not deny the credentials (and therefore still grant credentials) even in case the received current identifier does not match the intended location identifier, and to charge the subscriber who was initially provided with the device 213. In another example, the service provider does not charge the subscriber with a fee but just send a notification to his subscriber such as an email, for asking stopping the illegal use. In yet another example, the service provider grants the credentials in case of an illegal usage but notifies the user of the illegal usage, inviting him to subscribe to the pay television service, for example by displaying dedicated messages on the device 213.

### Network based device localization

In a second embodiment, the location identifiers IDL1, IDL2 corresponding to the customer locations are stored in a server 25 according to any of the variants described above. More precisely each location identifier is associated with a physical location, according to any of the variants described above. The device 212, 213 transmits the received current location identifier IDL1, IDL2 according to any of the variants described above to the server 25 in a data packet via a communication network. Advantageously the device 212, 213 also transmits its own device identifier IDD1, IDD2 to the server 25. The server receiving the current location identifier IDL1, IDL2 of the device localizes the physical location of the device from the association of the physical location with the received current location identifier. Localizing devices accessing a service is advantageous in case of illegal usage as described above. Localizing devices from the current location identifier, independently from granting/denying credentials is further advantageous as it allows service providers offering new applications on their delivery network, leveraging the location of the user. Localizing devices from the current location identifier received in any of the described variants and/or embodiments, and independently from granting/denying credentials is compatible with the disclosed principles.

### Standalone device credentials grant

In a third embodiment, where connection to a remote server may not be available, the intended location identifier IDL1 is provisioned in the devices 212 and 213 before the devices are provided to the customer, and put in operation by the customer. This is for example performed as part of the device shipment process. More precisely, as the customer subscribes to services, he communicates various information about his home address, bank account... Among this information, the subscriber either directly provides a unique identifier IDL1 of his home, that is being transmitted over his power distribution network 210 as the current identifier, or by providing his home address, the customer allows the provider to get that unique identifier IDL1 of the customer home, from for example a shared database. Before providing the customer with devices 212, 213 for receiving the services being subscribed to, the service provider configures the devices 212, 213 with the unique identifier IDL1 of the customer home as the intended location identifier. As the customer located at location 21 connects his device 212 to both the pay television network 24 and to the power distribution network 210 the device 212 receives a current location identifier IDL1 from the power distribution network 210. If the device 213 is connected to both the pay television network 24 and to the power distribution network 220 of location 22, the device 213 receives a current location identifier IDL2 from the power distribution network 220. In the steps S14-S16, the received current location identifiers IDL1, IDL2 are evaluated against the provisioned intended location identifier IDL1. In case both identifiers match, as for example at location 21, revealing the device 212 is installed in an expected location, credentials for receiving the services corresponding to the subscription are granted in the step S18. In the example of conditional access systems, granting the credentials comprises for instance receiving and forwarding entitlement management messages to a smart card so that a valid decryption key is provided to the device 212 for accessing the protected content. In the example of the DRM, granting the credentials comprises for instance forwarding a license, being pre-provisioned in the device 212, to the DRM module for providing access to the protected content. Any other means for granting credentials to the device 212 in case the received current location identifier matches the provisioned intended location identifier are compatible with the disclosed principles.

Symmetrically, in case both identifiers do not match, as for example at location 22, revealing that the device 213 is installed in an unexpected location, the credentials for receiving the services corresponding to the subscription are denied in the step S19. In other words, credentials are not granted and the services corresponding to the subscription cannot be decrypted and correctly received on the device 213, connected to the delivery network 24 from an unexpected location 22. In the example of conditional access systems, denying the credentials, for instance comprise not receiving entitlement management messages from the delivery network 24. In case the entitlement management messages are received by the device 213, denying the credentials comprises for instance deleting received EMMs, or at least not forwarding them to the smart card so that no valid decryption key is provided to the device 213, which is not able to access the protected content. In the example of the DRM, denying the credentials, for instance comprises blocking or even deleting the license that was pre-provisioned in the device 212, so that the DRM module is not able to provide any access to the protected content. Any other means for denying credentials to the device 213 in case the current location identifier does not match with the intended location identifier are compatible with the disclosed principles.

In the variants and embodiments previously described, the disclosed principles assumed the device 212, 213 is powered from the power distribution network as it receives pay television services from the delivery network. According to a particular embodiment, the disclosed principles are not limited to that configuration and also apply to battery powered devices receiving pay television services from the delivery network, as they are battery powered. In such a case, the current location identifier is received by the battery powered devices as they are connected to the power distribution network for charging the battery. According to this particular embodiment, the received current location identifier is considered as valid (i.e. being currently received) over a period of time taking into account the battery autonomy of the device. For example the autonomy duration is two days, and once a current location identifier is received from the power distribution network as the battery is charging, and credentials are granted, the credentials are considered granted over that duration of two days. Any other duration is compatible with the disclosed principles. In case no current location identifier is received over a period longer than the autonomy duration, the credentials are denied again. Any variant for extending the validity of the credential by taking into account the autonomy of the battery is compatible with the disclosed principles.

Each time the battery powered device is connected to the power distribution network and a current location identifier is received, credentials are granted/denied and/or the device is localized according to the disclosed principles.

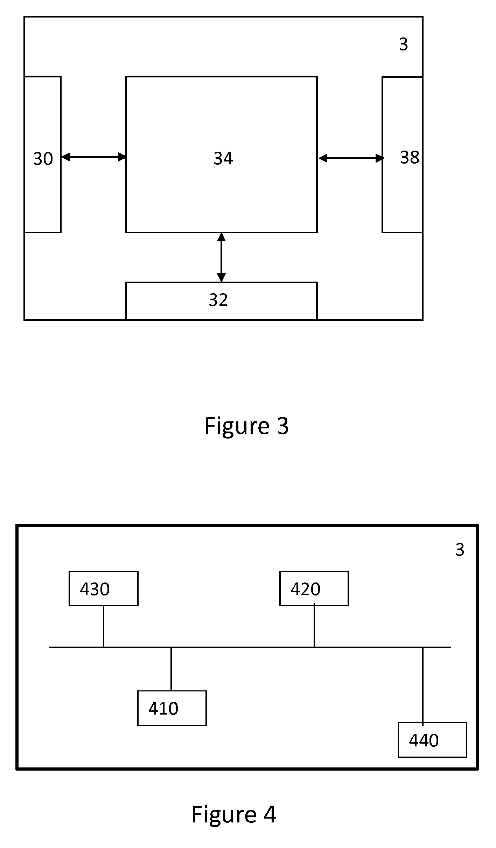

**Figure 3** depicts a processing device 3 being granted location-based credentials for accessing a service. The processing device 3 is an exemplary implementation of the device 212, 213 of figure 2.

According to a specific and non-limiting embodiment, the processing device 3 comprises a first powerline network interface 30 configured to at least receive, and optionally send packets from/to at least one other powerline transmitter device. According to different embodiments of the disclosed principles, the powerline network interface belongs to a set comprising:
- A powerline interface compliant to the HomePNA standard in any of its variant;
- A powerline interface compliant to any standard of the HomePlug Powerline Alliance in any of its variants;
- A powerline interface compliant to the specifications of the ITU-T G.hn group.
More generally any powerline network interface allowing to send and receive data packets to/from a wireless device on a power distribution network, is compatible with this principle.

According to a specific and non-limiting embodiment, the processing device 3 further comprises at least one second network interface 38 configured to send and receive data, comprising at least service reception from a delivery network. According to a specific and non-limiting embodiment, the delivery network is a bi-directional network and enables both video service delivery and the data traffic required for granting and/or denying credentials. According to another specific and non-limiting embodiment the delivery network is a unidirectional network, such as a satellite or a terrestrial broadcast network, and another bi-directional network, such as for example Internet carries the data traffic required for granting or denying credentials. According to different embodiments of the disclosed principles, the second network interface belongs to a set comprising:
- An Hybrid Fiber Coaxial (HFC) delivery network interface comprising shared coaxial cable infrastructures;
- A satellite delivery network interface optionally comprising a return channel;
- A terrestrial delivery network interface;
- A cellular wireless network interface such as for example 3G, 4G, LTE networks;
- A Wireless Local Area network such as WiFi in any of its variants;
- An Internet network interface, in any of its variants.
More generally any network interface allowing to send and receive packets and services from a head-end, is compatible with this principle.

The first and at least one second network interfaces 30 and 38 are linked to a processing module 34 configured to grant location-based credentials to the processing device 3 for accessing a service, wherein the processing device 3 is identified by a device identifier, which is associated with an intended location identifier. The processing module 34 is configured to receive a current location identifier from the network interface 30, as the processing device 3 is connected to a power distribution network and power supplied from the power distribution network. The processing module is further configured to grant credentials to the processing device 3 in case the current location identifier matches the intended location identifier.
Granted credentials allow the processing module to decrypt and correctly decode services received from the network interface 38, so as to display decrypted and decoded services on a display means via an output 32. According to a particular embodiment, the display means is external to the device and the output 32 sends the decoded data to an external display means. According to different embodiments of the principle, the display means, internal or external, belongs to a set comprising:
- a personal computer screen;
- a TV screen;
- a tablet;
- a smartphone screen.
According to different embodiments of the principle, the output data also comprises an input/output interface so as to exchange data with a user via a remote control or a user interface. More generally any display means allowing to display decoded data based on granted credentials, and any network interface allowing to send decoded data, are compatible with this principle.

**Figure 4** represents an exemplary architecture of the processing device 3 according to a specific and non-limiting embodiment, where the processing device 3 is configured to grant location-based credentials to access a service. The processing device 3 comprises one or more processor(s) 410, which is (are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3. The power source 440 is further configured as a network interface to send and receive data over the power distribution network.

According to an exemplary and non-limiting embodiment, the processing device 3 further comprises a computer program stored in the memory 420. The computer program comprises instructions which, when executed by the processing device 3, in particular by the processor 410, make the processing device 3 carry out the processing method described with reference to figure 1. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).
According to exemplary and non-limiting embodiments, the processing device 3 is a device, which belongs to a set comprising:
- a set top box device;
- a TV device;
- a digital media player device;
- a game device ;
- a Internet gateway device;
- a smartphone;
- a mobile device ;
- a tablet (or tablet computer) ;
- a laptop;
- a server;
- a communication device.

## Claims

1. A method for granting location-based credentials to a device (212) for accessing a service, wherein said device (212) is identified by a device identifier (IDD1) and said device identifier (IDD1) is associated with a location identifier (IDL1), said method comprising:
- Receiving (S12) a current location identifier by said device (212) from a power distribution network (210), said device (212) being connected to said power distribution network (210) and power supplied from said power distribution network (210);
- Granting (S18) said credentials to said device (212) in case said current location identifier matches said location identifier (IDL1).

2. The method according to claim 1, wherein said current location identifier is received from another device connected to said power distribution network (210).

3. The method according to claim 2, wherein said another device is a power meter (211) of a power supply system (23) delivering power on said power distribution network (210).

4. The method according to any of claims 1 to 3, wherein said current location identifier is received by said device (212) in a beacon periodically transmitted over said power distribution network (210).

5. The method according to any of claims 1 to 4, wherein said location identifier (IDL1) is provisioned in said device (212) and a matching of said current location identifier to said location identifier (IDL1), is evaluated in said device (212).

6. The method according to any of claims 1 to 4, further comprising transmitting said device identifier (IDD1) and said current location identifier to a server (25) via a communication network (24), said device (212) receiving from said server (25) said granted credentials in case said current location identifier matches said location identifier (IDL1).

7. The method according to claim 6, further comprising obtaining an indication of illegal location (22) from said received current location identifier (IDL2), in case said current location identifier (IDL2) does not match said location identifier (IDL1).

8. A method for localizing a device (212, 213) accessing a service, said method comprising:
- Receiving from said device (212, 213) a current location identifier, being received by said device (212, 213) from a power distribution network (210, 220), said device (212, 213) being connected to said power distribution network (210, 211) and power supplied from said power distribution network (210, 220);
- Localizing said device (212, 213) based on said received current location identifier, said current location identifier being associated with a location.

9. A device (212) being granted location-based credentials to access a service, wherein said device (212) is identified by a device identifier (IDD1) and said device identifier (IDD1) is associated with a location identifier (IDL1), said device (212) comprising at least one processor configured to :
- Receive a current location identifier from a power distribution network (210), said device (212) being connected to said power distribution network (210) and power supplied from said power distribution network (210);
- Transmit said device identifier (IDD1) and said current location identifier to a server (25);
- Receive from said server (25) said credentials to access said service in case said current location identifier matches said location identifier (IDL1).

10. The device (212) according to claim 9, wherein said current location identifier is received from a power meter of a power supply system delivering power on said power distribution network (210).

11. A server (25) granting location-based credentials to a device, for accessing a service, wherein said device (212) is identified by a device identifier (IDD1) and said device identifier (IDD1) is associated with a location identifier (IDL1), said server (25) comprising at least one processor configured to :
- Receive from said device (212) said device identifier and a current location identifier being received by said device (212) from a power distribution network (210), said device (212) being connected to said power distribution network (210) and power supplied from said power distribution network (210);
- Grant said credentials to said device (212) in case said current location identifier matches said location identifier (IDL1).

12. A device (212) being granted location-based credentials to access a service, wherein said device (212) is identified by a device identifier (IDD1) and said device identifier (IDD1) is associated with a location identifier (IDL1), said device (212) comprising at least one processor configured to :
- Receive a current location identifier from a power distribution network (210), said device (212) being connected to said power distribution network (210) and power supplied from said power distribution network (210);
- Grant said credentials to access said service in case said current location identifier matches said location identifier (IDL1).

13. The device (212) according to claim 12, wherein said current location identifier is received from a power meter of a power supply system delivering power on said power distribution network (210).

14. A computer program for granting location-based credentials to a device (212), for accessing a service, wherein said device (212) is identified by a device identifier (IDD1) and said device identifier (IDD1) is associated with a location identifier (IDL1), said computer program comprising program code instructions executable by a processor for:
- Receiving a current location identifier from a power distribution network (210), said device (212) being connected to said power distribution network (210) and power supplied from said power distribution network (210);
- Granting said credentials to access said service in case said current location identifier matches said location identifier (IDL1).

15. A computer program for granting location-based credentials to a device (212) for accessing a service, wherein said device (212) is identified by a device identifier (IDD1) and said device identifier (IDD1) is associated with a location identifier (IDL1), said computer program comprising program code instructions executable by a processor for:
- Receiving a current location identifier from a power distribution network (210), said device (212) being connected to said power distribution network (210) and power supplied from said power distribution network (210);
- Transmitting said device identifier (IDD1) and said current location identifier to a server;
- Receiving from said server said credentials to access said service in case said current location identifier matches said location identifier (IDL1).
